# EUROPÄISCHE PATENTANMELDUNG

(11) **EP 2 940 351 A1**
(43) Veröffentlichungstag der Anmeldung: **04.11.2015**
(21) Anmeldenummer: 14003268.1
(22) Anmeldetag: 22.09.2014
(51) Int. Cl.: F16J 15/08, F01N 13/18

(54) **Metallische Dichtung**

(30) Priorität: 30.04.2014 DE 102014208267
(71) Anmelder: Ontop Abgastechnik GmbH, 51674 Wiehl (DE)
(72) Erfinder: Bruls, Philip, 6086 NK Neer (NL)
(74) Vertreter: Griebling, Onno

(57) **Zusammenfassung**

Die vorliegende Anmeldung betrifft einen Metallische Abdichtung zum Abdichten von miteinander zu einem Abgasrohr verbundenen Rohrstücken, wobei die Abdichtung aus einem Metall besteht.

## Beschreibung

### TECHNISCHES GEBIET

Die vorliegende Erfindung betrifft eine metallische Dichtung zum Abdichten von miteinander zu einem Abgasrohr verbundenen Rohrstücken.

### STAND DER TECHNIK

Abgassysteme, insbesondere im Bereich von Öfen oder jeder anderen Art von Brennern, umfassen üblicherweise ein oder mehrere gegebenenfalls als "Schornstein" zu bezeichnende(s) Abgasrohr(e). Diese Abgasrohre werden heutzutage üblicherweise aus miteinander zu verbindenden Rohrstücken zusammengesetzt, die sich in axialer Richtung, d. h. entlang der Abgasrohrstrecke, miteinander verbinden lassen. In diesem Zusammenhang gibt es verschiedenste Geometrien von Abgasrohrstücken, die unterschiedlichen Funktionen dienen, beispielsweise als Umlenkstück oder als T-Stück.

Wenn die Rohrstücke miteinander verbunden sind, müssen sie abgedichtet werden, um zu vermeiden, dass (eventuelle) Kondensate austreten können oder das Abgas aus dem Innenraum des Abgasrohres nach außen dringt und somit die Abgasführung beeinflussen oder die unmittelbare Umgebung des Abgasrohrs beeinträchtigen könnte. Hierfür werden herkömmlich Dichtungsringe aus Gummi, Kautschuk oder ähnlichem

(Kunststoff-)Material eingesetzt. Alternativ können die Rohrenden konisch ausgeführt sein, sodass die hierdurch gebildete Steckverbindung aus in einander gedrückten Rohrenden (fast) dicht ist.

Je nach Einsatz des Abgasrohres kommt es jedoch dazu, dass sich im Bereich der Dichtungen Kondensat niederschlägt, das beispielsweise als Säuren vorliegen und die Dichtungsringe angreifen kann. Außerdem müssen diese Dichtungsringe stark variierenden Temperatur- und Druckbedingungen standhalten, sodass herkömmliche Dichtungsringe nur eine sehr begrenzte Lebensdauer aufweisen.

Die konischen Verbindungen (ohne Gummiring) bleiben auch nicht zuverlässig dicht, weil die starre unter Spannung stehende Verbindung durch Aufwärmungen und Abkühlungen negativ beeinflusst wird, sodass Ausdehnungen und Einschrumpfungen entstehen. Hiermit verliert eine konische Verbindung seine Dichtheit.

### DARSTELLUNG DER ERFINDUNG

Die vorliegende Erfindung löst die Aufgabe, einen Dichtungsring zum Abdichten von miteinander zu einem Abgasrohr verbundenen Rohrstücken bereitzustellen, der einerseits eine zuverlässige Verbindung der Rohrstücke sicherstellt und andererseits gegenüber den äußeren Belastungen durch Säurekondensat, stark unterschiedliche Temperaturbedingungen (bzw. Ausdehnungen und Einschrumpfungen) oder Druckbedingungen eine hohe Widerstandskraft aufweist, so dass eine lange Lebensdauer des Dichtungsrings gewährleistet werden kann. Insbesondere besteht die Aufgabe der vorliegenden Erfindung darin, einen Dichtungsring bereitzustellen, der eine wesentlich verbesserte Haltbarkeit gegenüber den bisherigen Dichtungsringen aus Gummi, Kautschuk oder ähnlichen Materialien aufweist (inklusive ein konisches Prinzip).

Die Lösung der Aufgabe ergibt sich aus dem Patentanspruch 1. Vorteilhafte Ausgestaltungen der Erfindung ergeben sich aus den Unteransprüchen.

Erfindungsgemäß besteht der Dichtungsring aus einem Metall, insbesondere aus Edelstahl, optional mit einer Beschichtung beispielsweise aus Chrom oder Nickel. Die metallische Abdichtung kann auch durch eine metallische Beschichtung eines nicht-metallischen Grundmaterials gebildet werden. Dies wird jedoch aus fertigungstechnischen Gründen nicht bevorzugt.

Die Verwendung einer metallischen Abdichtung aus Metall führt dazu, dass die metallische Abdichtung gegenüber den zuvor beschriebenen äußeren Einflüssen wesentlich widerstandsfähiger ist als die bisher verwendeten Dichtungsringe aus Gummi, Kautschuk oder Kunststoff.

Bevorzugt weist die metallische Abdichtung dabei eine Federstruktur zum Aufbringen einer Kraft, insbesondere einer radialen Kraft, auf die miteinander verbundenen Rohrstücke auf. Durch die Federstruktur ist es möglich, die metallische Abdichtung trotz ihrer Eigenschaft als Metallring mit einer elastischen Eigenschaft zu versehen, sodass die Dichtigkeit der miteinander verbundenen Rohrstücke sichergestellt wird.

Weiter bevorzugt weist die metallische Abdichtung eine radial innen angeordnete Lippe oder mehrere radial angeordnete Lippen auf. Durch die Verwendung solcher Lippen kann eine besonders gute Dichtungswirkung durch die metallische Abdichtung beim Abdichten von miteinander verbundenen Rohrstücken erzielt werden. Damit kann besonders zuverlässig verhindert werden, dass Abgas aus der Rohrleitung nach außen tritt.

In einer bevorzugten Ausführungsform sind die Rohrstücke derart miteinander verbunden, dass sie an einer Verbindungsstelle ineinander gesteckt sind, um ein im Bereich der Verbindungsstelle dichtes Abgasrohr zu bilden. Die metallische Abdichtung dient also insbesondere solchen Ausführungsformen von miteinander verbundenen Rohrstücken, bei denen die Rohrstücke ineinander gesteckt werden, das heißt nicht miteinander verschraubt oder aneinander geflanscht werden. Hierbei wird die metallische Abdichtung bevorzugt radial zwischen ein erstes Rohrstück und ein zweites Rohrstück eingesetzt.

Weiter bevorzugt ist die metallische Abdichtung integral mit einem Rohrstück in dessen Innenraum ausgebildet. Alternativ ist es auch möglich, die metallische Abdichtung als separates Element vorzusehen, sodass er vor oder nach dem Verbinden der Rohrstücke an deren Innenseite, Außenseite oder zwischen den miteinander verbundenen Rohrstücken angebracht werden kann. Die Ausgestaltung der metallischen Abdichtung als integral mit einem Rohrstück ausgebildeter Ring ermöglicht eine besonders effiziente Montage des Abgasrohrs und stellt zudem eine besonders sichere Dichtung dar.

Weitere Merkmale der Erfindung ergeben sich aus der nachfolgenden Figurenbeschreibung und der Gesamtheit der Patentansprüche.

### KURZE FIGURENBESCHREIBUNG

Figur 1 zeigt eine Draufsicht einer bevorzugten metallischen Abdichtung.
Figur 2 zeigt eine Seitenansicht einer bevorzugten metallischen Abdichtung.
Figur 3 zeigt einen Ausschnitt aus der Darstellung der Figur 2 als seitliche Schnittdarstellung.

### WEGE ZUR AUSFÜHRUNG DER ERFINDUNG

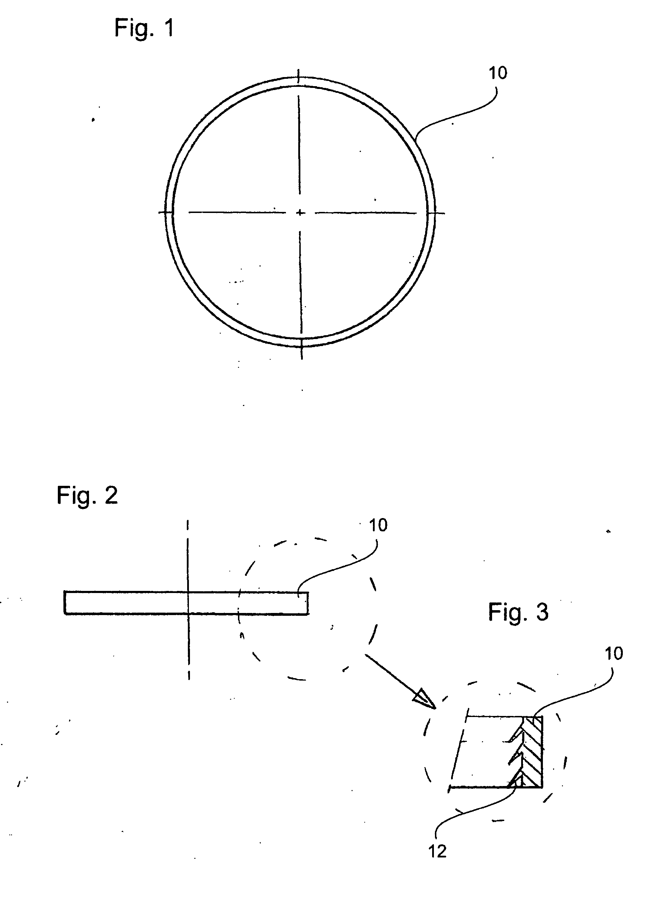

In den Figuren 1 und 2 ist eine bevorzugte metallische Abdichtung 10 in einer Draufsicht und in einer Seitenansicht gezeigt. Die metallische Abdichtung 10 weist die üblichen Eigenschaften einer metallischen Abdichtung auf und kann zusätzlich zu der schematischen Abbildung aus den Figuren 1 und 2 weitere Merkmale, insbesondere die oben genannten Merkmale, aufweisen.

So ist es beispielsweise möglich, dass der Ring eine Federstruktur zum Aufbringen einer Kraft, insbesondere einer radialen Kraft auf die miteinander verbundenen Rohrstücke aufweist, die in den Figuren 1 und 2 nicht illustriert ist.

Figur 3 zeigt eine Schnittdarstellung eines Ausschnitts der Figur 2. Hier ist die metallische Abdichtung 10 teilweise gezeigt. Es ist zu erkennen, dass an der Innenseite der metallischen Abdichtung 10 (zum Beispiel drei) Lippen 12 vorgesehen sind, die sich auf der radial inneren Seite von der metallischen Abdichtung 10 aus erstrecken. Die Lippen 12 erstrecken sich nicht ausschließlich radial nach innen, sondern sind in axiale Richtung geneigt, um eine Vorspannung auf eine durch die metallische Abdichtung 10 abzudichtende Verbindungsstelle der zu dem Abgasrohr zu verbindenden Rohrstücke auszuüben. Auf diese Weise wird die Dichtungsqualität der metallischen Abdichtung 10 verbessert und ein Austreten von Abgas an der Verbindungsstelle zwischen den Rohrstücken sicher vermieden.

Die in den Figuren gezeigte bevorzugte metallische Abdichtung 10 ist vorzugsweise aus Edelstahl gefertigt, kann jedoch auch aus einem andersartigen Metall bestehen. Beispielsweise kann die metallische Abdichtung eine Beschichtung aus Chrom oder Nickel aufweisen, um gegenüber Korrosion noch besser geschützt zu sein.

Die erfindungsgemäße metallische Abdichtung kann beispielsweise auch durch einen in eine Metallfolie eingewickelten Ring aus Federdraht, eine geschweißte Metallfolie oder ein stranggepresstes Metallprofil ausgebildet werden.

Durch die vorliegende Erfindung ist es möglich, eine sichere Dichtung von miteinander zu verbindenden Rohrstücken einer Abgasanlage bereitzustellen, die gegenüber den bisherigen Dichtungslösungen hinsichtlich der Langlebigkeit und Widerstandsfähigkeit gegenüber äußeren Einflüssen deutlich verbessert ist.

## Patentansprüche

1. Metallische Abdichtung (10) zum Abdichten von miteinander zu einem Abgasrohr verbundenen Rohrstücken,
**dadurch gekennzeichnet, dass**
die metallische Abdichtung (10) aus einem Metall besteht.

2. Metallische Abdichtung (10) nach Anspruch 1, wobei die metallische Abdichtung aus Edelstahl besteht.

3. Metallische Abdichtung (10) nach einem der vorhergehenden Ansprüche, wobei die metallische Abdichtung (10) eine Federstruktur zum Aufbringen einer Kraft, insbesondere einer radialen Kraft, auf die miteinander verbundenen Rohrstücke aufweist.

4. Metallische Abdichtung (10) nach Anspruch 3, wobei die Kraft dazu geeignet ist, eine fluiddichte Abdichtung zwischen den miteinander verbundenen Rohrstücken auszubilden.

5. Metallische Abdichtung (10) nach einem der vorhergehenden Ansprüche, wobei die metallische Abdichtung (10) eine oder mehrere radial innen angeordnete Lippen (12) aufweist.

6. Metallische Abdichtung (10) nach einem der vorhergehenden Ansprüche, wobei die Rohrstücke derart miteinander verbunden sind, dass sie an einer Verbindungsstelle ineinander gesteckt sind, um ein im Bereich der Verbindungsstelle dichtes Abgasrohr zu bilden.

7. Metallische Abdichtung (10) nach einem der vorhergehenden Ansprüche, wobei das Abgasrohr Teil einer Abgasanlage eines Ofens oder Wärmeerzeugers mit Brenner ist.

8. Metallische Abdichtung (10) nach einem der vorhergehenden Ansprüche, wobei die metallische Abdichtung (10) integral mit einem Rohrstück in dessen Innenraum ausgebildet ist.

9. Metallische Abdichtung (10) nach einem der vorhergehenden Ansprüche, wobei die metallische Abdichtung (10) Federdraht, eine Metallfolie und/oder ein Strangpressprofil mit einer U-Profilform aufweist.
